# EUROPEAN PATENT APPLICATION

(11) **EP 3 575 692 A1**
(43) Date of publication of application: **04.12.2019**
(21) Application number: 19171678.6
(22) Date of filing: 18.08.2015
(51) Int. Cl.: F24C 7/08

(54) **HEAT TREATMENT SYSTEM**

(30) Priority: 18.08.2014 EP 14002866
(62) Divisional of application: 15759411.0
(71) Applicant: Stork genannt Wersborg, Ingo, 80799 München (DE)
(72) Inventor: Stork genannt Wersborg, Ingo, 80799 München (DE)
(74) Representative: Müller Hoffmann & Partner

(57) **Abstract**

A heat treatment system, comprises a tray holder with at least one tray for placing goods to be heated, a first heat treatment machine having a first heat treatment chamber adapted to accommodate the tray holder, the first heat treatment chamber having a first opening in a base part thereof, and an elevation apparatus configured to transport the tray holder between a first position within the first heat treatment chamber and a second position below the first heat treatment chamber through the first opening.

## Description

The present invention is related to a heat treatment system, in particular a system for heating, baking or proofing of food to be heated like bread, dough or the like.

When using heat treatment machines such as ovens or proofers it frequently happens that the user misses the notification of a finished baking program. If the user misses the notification, the food may stay inside the heat treatment machine or oven or proofer and be subject to overheating. Thus, loading or unloading of a heat treatment chamber or oven or proofer shall be automated.

Furthermore, when a heat treatment machine or oven or proofer has to be loaded or unloaded, in general, the front door has to be opened. With the front door opened, the hot air inside the heat treatment chamber or oven or proofer is exchanged with cold air from outside. This leads to a temperature drop inside and subsequently the heat treatment machine or oven or proofer has to reheat the air. This deteriorates energy efficiency of the system.

Moreover, in conventional heat treatment machines or ovens or proofers the trays with baking goods have to be loaded and unloaded one after the other and separately. This process takes up a lot of time.

This problem has been addressed before. In DE102013100298A1, a transport rack is positioned in front of the oven with a mechanical system to bridge the gap between the oven and the transport rack.

It is the object of this invention to provide a heat treatment system where trays with baking goods are loaded and unloaded more quickly, energy-serving, and therefore more efficiently.

The object is achieved by the subject-matter of independent claim 1. Further embodiments are defined in the dependent claims.

### SUMMARY OF THE INVENTION

There is provided a heat treatment system, comprising a tray holder with at least one tray for placing goods to be heated, a first heat treatment machine having a first heat treatment chamber adapted to accommodate the tray holder, the first heat treatment chamber having a first opening in a base part thereof, and an elevation apparatus configured to transport the tray holder between a first position within the first heat treatment chamber and a second position below the first heat treatment chamber through the first opening.

According to an embodiment, the heat treatment system further comprises a rack system for accommodating the tray holder, wherein the rack system is arranged below the first opening, and the second position is within the rack system.

In a further embodiment, the heat treatment system further comprises a second heat treatment machine having a second treatment chamber adapted to accommodate the tray holder, the second heat treatment chamber having a second opening in an upper part thereof, and wherein the second heat treatment chamber is arranged below the first heat treatment chamber, the second position is within the second chamber, and the elevation apparatus is configured to reciprocally transport the tray holder between the first position and the second position through the first opening and the second opening.

In yet another embodiment, the second heat treatment chamber has a third opening in a base part thereof, and the elevation apparatus is configured to reciprocally transport the tray holder between the first position, the second position and a third position below the second heat treatment chamber through the first opening and the second opening and the third opening.

According to an embodiment, the heat treatment system further comprises a rack system for accommodating the tray holder, wherein the rack system is arranged below the third opening, and the third position is within the rack system.

In yet another embodiment, the rack system is movable by an operator.

In a further embodiment, the heat treatment system further comprises a vacuum pump configured to reduce the air pressure in at least one of the first heat treatment chamber and the second heat treatment chamber.

In yet another embodiment, the first heat treatment machine is configured to bake food, and the second heat treatment machine is configured to proof food.

In another embodiment the tray holder is transported linearly along a vertical direction.

In another embodiment, the heat treatment system further comprises a dividing piece arranged between the first heat treatment chamber and the second heat treatment chamber having a closed position and an opened position, wherein when being in the opened position, the dividing piece allows the tray holder to be transported reciprocally between the first position and the second position through the first opening and the second opening, and when being in the closed position, the dividing piece closes the first opening.

In yet another embodiment, the dividing piece is configured to be stored behind the heat treatment system when being in the opened position.

In a further embodiment, the dividing piece configured to be stored in a rolled shape.

In yet a further embodiment, the elevation apparatus comprises a movable mount detachably connectable to the tray holder, and a tackle means adapted to lift and lower the movable mount.

In a further embodiment, the elevation apparatus comprises a rack and pinion adapted to lift and lower the tray holder.

In another embodiment, the elevation apparatus comprises a hydraulic plunger arranged at the rack system and adapted to lift and lower the tray holder.

It is an advantage of the present invention to prevent loss of heat during a loading process. According to an embodiment, a rack system is combined with a heat treatment machine and an opening is included between the two. An elevation system may transport a tray holder that may contain food placed on trays from the heat treatment chamber to the rack system and vice versa. This system allows an automated loading and unloading of the heat treatment chamber or oven.

In another embodiment of this invention one may use an oven and proofing combination. The proofer may be the lower unit. If the food or baking good such as a croissant has finished proofing the tray holder containing the trays with croissants may be moved up into the oven and down once the baking program has finished.

In another embodiment of this invention this process may be monitored and controlled by a sensor system and a data unit such as visual sensors and data processing with computers.

In another embodiment of this invention a machine learning technique may learn from reference data and eventual user feedback how to control the oven or heat treatment machine or proofer.

In another embodiment of this invention it is of advantage to use a divider piece for the opening. This divider piece may be opened like a sun roof and be stored in the back of the rack system or proofer. This is of advantage as the heating technology of a heat treatment machine such as an convection oven is positioned in the back side of the oven. Thus, folding or positioning the divider piece in behind the rack system or proofer system is saving space. It is further of advantage to load a heat treatment machine from the bottom side as heated air flows upwards. Thus, this approach may be more energy preserving compared to heat treatment chambers that open sideways.

If the rack system or proofer has a door itself, it may be combined in another embodiment of this invention with a vacuum pump. After the heat treatment, the food may be lowered from the heat treatment chamber into the rack system or proofer. If the rack system and proofer consists of a closable pressure resistant itself, air may be pumped out of this chamber. This has the effect that the boiling point is being lowered with may be used to continue with the heat treatment such as baking. This may result in a more energy preserving and time efficient baking, as the bake is partly taking place in the pressure chamber. Also, once it is finished baking and after vacuum baking the trays and food may be handwarm.

Another embodiment of this invention is a heat treatment machine with five visual sensors of five arrays of photodiodes, a processing unit, shading system or blend integrated into the glass doors, with cable management to loop through the door angle, polarization filtering to minimize reflections. In another embodiment of this invention it is possible to combine several pictures to calculate a better saturated picture.

### BRIEF DESCRIPTION OF THE FIGURES

The accompanying drawings, which are included to provide a further understanding of the invention and are incorporated in and constitute a part of this application, illustrate embodiment(s) of the invention and, together with the description, serve to explain the principle of the invention. In the drawings:
Fig. 1 shows a heat treatment system in a schematic cross-sectional front view,
Fig. 2 shows a heat treatment system with a rack system in a schematic cross-sectional front view,
Fig. 3 shows a heat treatment system with two heat treatment chambers in a schematic cross-sectional front view,
Fig. 4 shows a further heat treatment system with two heat treatment chambers in a schematic front view,
Fig. 5. shows a heat treatment system with two heat treatment chambers and a rack system in a schematic front view,
Fig. 6 shows a heat treatment system with a dividing piece in a schematic side view,
Fig. 7. shows a heat treatment system with a dividing piece stored behind the heat treatment system in a schematic side view,
Fig. 8 shows a heat treatment system with a dividing piece stored behind the heat treatment system in a rolled shape in a schematic side view,
Figs. 9A to 9C show a heat treatment system with a lifting apparatus in a schematic front view,
Fig. 10 shows a heat treatment system with sealed heat treatment chambers and vacuum pumps in a schematic front view,
Fig. 11 shows a heat treatment system with a rack and pinion in a schematic front view,
Figs. 12A and 12B show a heat treatment monitoring combined with a rack system adapted to load and unload the heat treatment machine with trays from the rack system,
Fig. 13A shows a schematic perspective view of a monitoring apparatus of an embodiment of the present invention attached to a door window of a heating chamber,
Fig. 13B shows a side view of the monitoring apparatus of Fig. 13A and a blind mounted between an outside window and a middle window of a triple glass window of a door of a heating chamber,
Fig. 13C shows a side view of the monitoring apparatus of Fig. 13A and a blind mounted between an outside window and a middle window of a triple glass window of a door of a heating chamber, wherein a visual sensor holder or photodiode array mounting is mounted in the monitoring apparatus,
Fig. 13D shows a monitoring apparatus cover of the monitoring apparatus and the blind of Fig. 13B in detail,
Fig. 13E shows an inside of the monitoring apparatus having the visual sensor holder or photodiode array mounting having an array of visual sensors or arrays of photodiodes to observe the inside of the heating chamber, wherein the inside surface of the monitoring apparatus cover is darkened to reduce reflections,
Fig. 13F shows a detailed plan view of the monitoring apparatus of Fig. 13E,
Fig. 13G shows a perspective view of the blind of Figs. 13C and 13D,
Fig. 13H shows an perspective view of the blind of Figs. 13C and 13D having a darkened inside surface to reduce internal reflections according to an embodiment,
Fig. 13I shows a plan view of the blind of Figs. 13C and 13D having a darkened inside surface to reduce internal reflections according to an embodiment,
Fig. 13J shows an perspective view of the blind of Figs. 13C and 13D having a darkened inside surface to reduce internal reflections according to an embodiment,
Fig. 13K shows a plan view of the blind of Figs. 13C and 13D having a darkened inside surface to reduce internal reflections according to an embodiment,
Fig. 13L shows a perspective view of a visual sensor holder or photodiode array mounting of an embodiment of the present invention to be mounted above the middle of a tray holder of a heating chamber,
Fig. 13M shows a plan view of a visual sensor holder or photodiode array mounting of an embodiment of the present invention to be mounted above the middle of a tray holder of a heating chamber.

### DETAILED DESCRIPTION

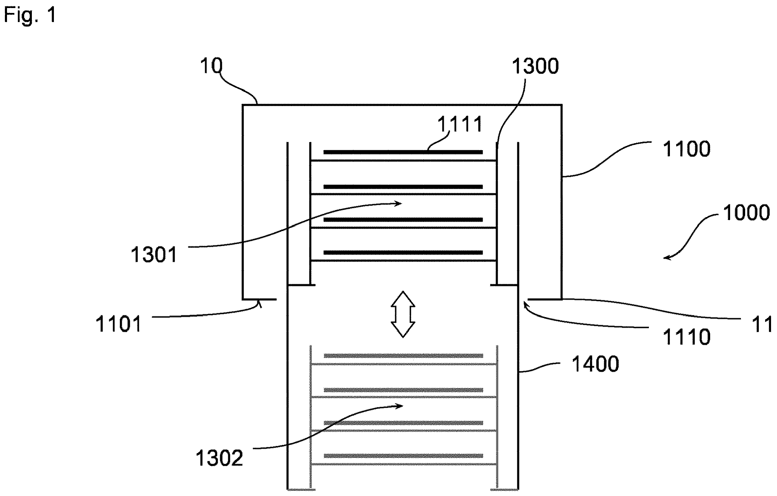

In Fig. 1 a heat treatment system 1000 according to an embodiment is shown. The heat treatment system 1000 comprises a tray holder 1300 with at least one tray 1111 for placing goods to be heated and a first heat treatment machine 10 having a first heat treatment chamber 1100 adapted to accommodate the tray holder 1300. The first heat treatment chamber has a first opening 1110 in a base part 11 thereof.

Goods to be heated may be food, e.g. dough, cookies, pastries, bread, cakes or the like. The goods and food may be placed on the at least one tray 1111. The tray holder 1300 may hold at least one tray 1111, or may hold e.g. 5 or 10 trays. A tray may have room for at least one food piece or pastry. Typically, a tray may have room for 5 or 10 or 20 or 100 food pieces or pastries. The tray holder 1300 may be made out of metal or another heat resistant and sturdy material and may be adapted to hold a predetermined number of trays 1111. A tray 1111 may be made out of metal or another heat resistant and/or heat conducting material, typically with a coating or paint.

The first heat treatment machine 10 may, according to an embodiment, further comprise a heating apparatus configured to heat the air within the first heat treatment chamber 1100 and subsequently the food or baking goods placed on the trays 1111. Other heating technologies are possible. The first heat treatment machine 10 may further comprise a control apparatus controlling the heating apparatus automatically. The control apparatus may comprise a user interface used for interaction with an operator to display information and/or to receive user input.

The first heat treatment machine 10, according to an embodiment, may be an oven or a proofing chamber. The first heat treatment machine 10 may heat the inside of the first heat treatment chamber 1100 and the foods therein to a temperature between 50°C and 250°C or between 100°C and 200°C when used as an oven, or between 20°C and 100°C or between 30°C and 80°C when used as a proofing chamber. The first heat treatment machine 10 may further control the air humidity and/or air composition and/or air pressure of the first heat treatment chamber in order to control the baking and/or proofing process. The first heat treatment machine 10 may be adapted to switch between a proofing and a baking process or state. The first heat treatment machine may increase or may decrease the air humidity of the first heat treatment chamber during the baking and/or the proofing process.

The first heat treatment chamber 1100 may, according to an embodiment, form in its inside a space for accommodating the tray holder 1300. The first opening 1110 connects the inside of the first heat treatment chamber 1100 with the outside for loading and unloading the tray holder 1300. The inside of the first heat treatment chamber 1100 may have a cubic shape. The space for accommodating the tray holder 1300 may be surrounded by a housing. The housing may comprise metal and/or other heat resistant materials. The housing may have a shape adapted and/or similar to the shape of the tray holder 1300.

The first opening 1110 may be in a base part 11 of the first heat treatment chamber 1100. The base part 11 of the first heat treatment chamber 1100 may comprise, according to an embodiment, a bottom side 1101 that lies in a lateral plane.

The first opening 1110 may have a vertical orientation or lateral orientation or an orientation in any other direction. The first opening 1110 may have, according to an embodiment, a vertical projection of the first opening 1100 on a lateral plane that is greater than zero. The vertical projection of the first opening 1110 on a lateral plane may also be greater than 90% of the whole opening area of the first opening 1110. The vertical projection of the first opening 1110 on a lateral plane may also be greater than 70% of the whole opening area of the first opening 1110. The vertical projection of the first opening 1110 on a lateral plane may also be greater than 50% of the whole opening area of the first opening 1110.

In the context of the present invention, "vertical" or "vertical direction" or "vertical orientation" refer to a direction that is parallel to the vector or direction of the force of gravity. Accordingly, "lateral" or "lateral direction " or "lateral orientation" refer to a direction that is perpendicular to the vector or direction of the force of gravity.

The base part or bottom side of the first heat treatment chamber 1100 may be the part or side of the first heat treatment chamber 1100 that is the most closest to the center of the force of gravity, i.e. the part or side of the first heat treatment chamber 1000 that is the most closest to the ground. Accordingly the upper part or upper side of the first heat treatment chamber 1100 may be the part or side of the first heat treatment chamber that is the most furthest from the center of gravity, i.e. the part or side of the first heat treatment chamber 1000 that is the most furthest from the ground.

The vertical projection of the first opening 1100 on a lateral plane may be large enough to load the tray holder 1300 linearly along an exactly or approximately vertical direction from below the first heat treatment chamber 1100 into the first heat treatment chamber 1110 through the first opening 1110. The tray holder 1300 may be unloaded from the first heat treatment chamber 1100 in an opposite direction. The tray holder 1300 may be transported from the first position 1301 to the second position 1302 and vice versa.

The first opening 1110 at the bottom side 1101 of the first heat treatment chamber 1100 has a cross-sectional dimension large enough to let pass the tray holder 1300 through it. The first opening 1110 may be 5% to 60% or 5%-30% or 10% to 20% larger in cross-sectional dimension as the largest diameter of the vertical projection of the tray holder 1300 on a lateral plane. The first opening 1110 may have a rectangular shape or an elliptical or round shape. The first opening 1110 may be extended to at least one inner side wall of the first heat treatment chamber 1100 or to at least one lateral side of the first heat treatment chamber 1100. According to an embodiment, the first opening 1110 may expand along the entire bottom side 1101 of the first heat treatment chamber 1100.

The first position 1301 and the second position 1302 are defined as points in space coinciding with the center of gravity of the tray holder 1300 located in the respective positions.

The heat treatment system 1000 further comprises an elevation apparatus 1400 configured to reciprocally transport the tray holder 1300 between a first position 1301 within the first heat treatment chamber 1100 and a second position 1301 below the first heat treatment chamber 1100 through the first opening 1110.

When being in the first position 1301, the tray holder 1300 may be entirely within the first heat treatment chamber 1100. When being in the second position 1302. the tray holder 1300 may be entirely outside of the first heat treatment chamber 1100.

The first position 1302 may be centered above the first opening 1101 inside the first heat treatment chamber 1100.

When being in the second position 1302, the tray holder 1300 may be 1m or 50cm or 10cm or 1cm below the first heat treatment chamber 1100. According to an embodiment, when being in the second position 1302, the tray holder may be entirely below the first heat treatment chamber 1100. The upper side of the tray holder 1300 may then overlap with the base part 11 of the first heat treatment chamber 1100 in a lateral direction. According to an embodiment, the second position 1302 is centered below the first opening 1110.

The elevation apparatus 1400 may entirely be inside the first heat treatment chamber 1100 or may be partly inside the first heat treatment chamber 1100 and partly outside the first heat treatment chamber 1100.

The elevation apparatus 1400 may transport the tray holder 1300 from a place or position 1302 under or below the first heat treatment chamber 1100 to a place or position 1301 within the first heat treatment chamber 1100 when loading and introducing the tray holder 1300 into the first heat treatment chamber 1100.

The operator may also control the elevation apparatus 1400, e.g. by buttons or a user interface. The elevation apparatus may, according to an embodiment, be controlled by the control apparatus of the first heat treatment machine 10.

The tray holder 1300 may be placed below the first heat treatment chamber 1100, e.g. in the first position 1301. The elevation apparatus 1400 lifts the tray holder 1300 with trays 1111 with foods or goods to be heated into the first heat treatment chamber 1100, e.g. in the first position 1301 within the first heat treatment chamber 1100, through the first opening 1110. The heat treatment then may be started, e.g. automatically by a computer program, the control apparatus or manually by an operator using the user interface. The heat treatment may comprise a baking process of the foods or goods. After the heat treatment has been finished the elevation apparatus 1400 may lower the tray holder 1300 from a position within the first heat treatment chamber automatically.

The embodiment illustrated by Fig. 1 is advantageous because it allows loading and unloading the first heat treatment chamber 1100 from below, therefore preventing hot air from leaking out of the first heat treatment chamber 1100. That is because hot air always streams upwards; therefore, the first opening 1101 in a base part 11 of the first heat treatment chamber 1100 or in a lateral plane does not allow the hot air to leak out. Therefore, the loading and unloading process according to the embodiment is more energy-saving compared to ordinary heat treatment machines or ovens. Moreover, the embodiment allows, e.g. thanks to the elevation apparatus, an automatic loading and unloading of the trays 1111 and food thereon, preventing food that is baked too long. This also leads to a more time efficient loading and unloading process.

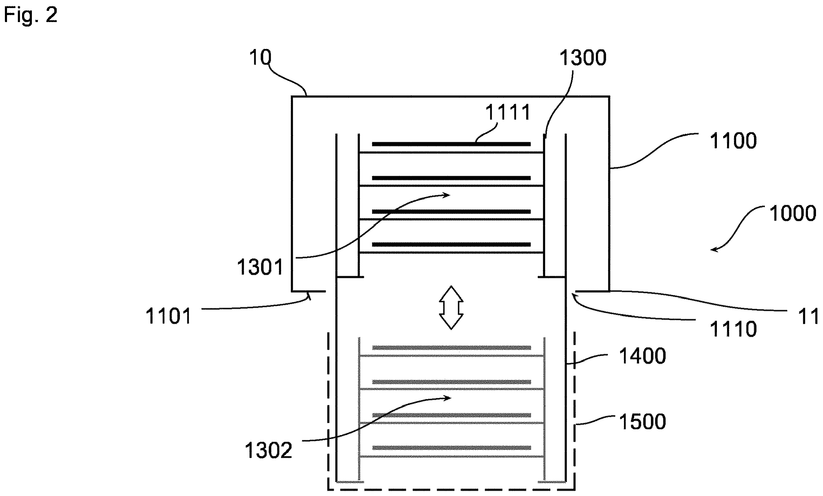

In Fig. 2 a heat treatment system 1000, according to an embodiment, is shown that further comprises a rack system 1500 for accommodating the tray holder 1300, wherein the rack system 1500 is placed below the first opening 1110. The second position 1302 is within the rack system 1500.

The rack system 1500 may accommodate the tray holder 1300 before and after the treatment of the foods or goods in the first heat treatment chamber 1100. This is of advantage for loading and unloading the tray holder with trays with goods or foods to be heated or, after the treatment for cooling. The rack system 1500 may accommodate more than one tray holder 1300 at a time. According to an embodiment, the tray holders 1300 may be stored in the rack system 1500 one upon the other. According to an embodiment, an operator may be able to load and unload the rack system 1500 via an opening in the lateral side of the rack system 1500 or via an opening in the upper side of the rack system 1500. The rack system 1500 stores the tray holder 1300 and places the tray holder 1300 in the correct position so that the elevation apparatus 1400 is able to pick up the tray holder 1300 and to transport the tray holder 1300 into the first heat treatment chamber 1100.

The rack system 1500 allows a yet more efficient loading and unloading process, as the rack system 1500 ensures that the tray holder is in the correct position to be picked up and transported by the elevation apparatus 1400.

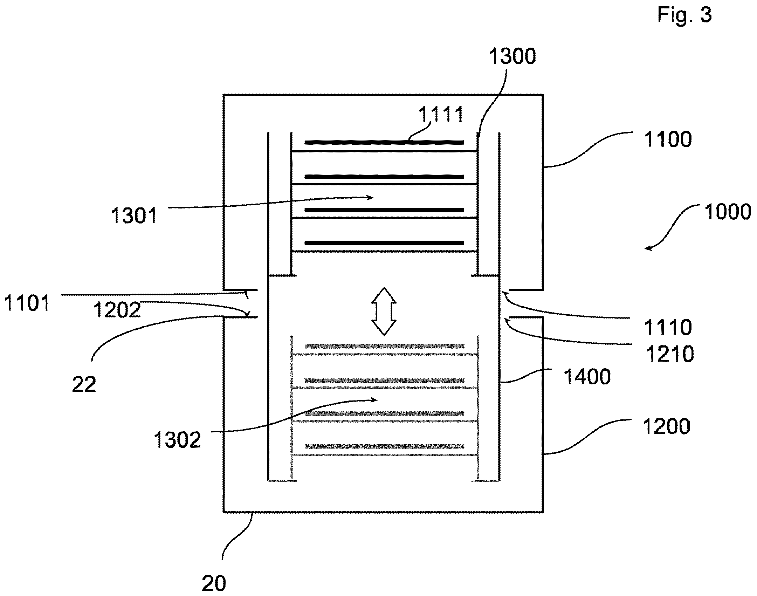

Fig. 3 illustrates a heat treatment system 1000 according to an embodiment that further comprises a second heat treatment machine 20 having a second heat treatment chamber 1200 adapted to accommodate the tray holder 1300. The second heat treatment chamber 1200 has a second opening in an upper part 22 thereof.

The second heat treatment chamber 1200 may have similar dimensions and a similar form as the first heat treatment chamber 1100 and may have similar features.

The second heat treatment chamber 1200 may also have a front door or front window in order to load a tray holder 1300 with trays 1111 into the second heat treatment chamber 1200. It may also be possible to unload the tray holder 1300 with trays 1111 from the second heat treatment chamber 1200.

The second opening 1210 may be similar to the first opening 1110 and may also have a vertical projection greater than zero. The vertical projection of the second opening 1210 on a lateral plane may also be greater than 90% of the whole opening area of the second opening 1210. The vertical projection of the second opening 1210 on a lateral plane may also be greater than 70% of the whole opening area of the second opening 1210. The vertical projection of the second opening 1210 on a lateral plane may also be greater than 50% of the whole opening area of the second opening 1210.

The second opening 1210 may be arranged under the first opening 1110 and the first opening 1110 and the second opening 1210 may overlap in a lateral direction.

According to an embodiment, the first heat treatment chamber 1100 and the second heat treatment chamber may be adjacent to each other. The first opening 1110 and the second opening may have the same shape and dimension and may overlap.

In the second position 1302, the tray holder 1300 may entirely be comprised in the second heat treatment chamber.

The second heat treatment chamber 1200 is arranged below the first heat treatment chamber 1100, and the second position 1302 is within the second heat treatment chamber 1200.

The elevation apparatus 1400 is configured to reciprocally transport the tray holder 1300 between the first position 1301 and the second position 1302 through the first opening 1110 and the second opening 1210.

The elevation apparatus 1400 may partly be arranged in the second heat treatment chamber 1200.

The second heat treatment chamber 1200 may be a proofing chamber. The tray holder with the food to be proofed and baked may be inserted into the second heat treatment chamber 1200. A proofing process may be started and controlled automatically. After proofing, the tray holder with the food may be lifted into the first heat treatment chamber 1100 via the second opening 1210 and the first opening 1110 by the elevation apparatus 1400. The first heat treatment chamber 1100 may serve as an oven. The baking process is then started and controlled automatically or manually. After the baking, the tray holder with the baked food may be lowered back into the second heat treatment chamber 1200 in order to cool down and to be unloaded from the heat treatment system 1000. This may be surveilled or monitored by an operator or by an automated computer program controlling the proofing and baking processes and the elevation apparatus 1400.

This heat treatment system 1000, according to an embodiment, allows an automated loading and unloading of the heat treatment chambers 1100 and 1200 and therefore may allow an automated baking process including proofing and cooling to hand warmth. It is not necessary that an operator takes the tray holder 1300 after the proofing process from the proofing chamber to the oven for baking, as the transport is achieved by the elevation apparatus. The embodiment is also more space-efficient, as the two heat treatment chambers are placed one on top of the other or sequentially in an vertical direction.

The control apparatus of the first heat treatment machine 10 and the control unit of the second heat treatment machine 20 may be connected together via a data exchange interface, e.g. a data cable or wirelessly, e.g. WLAN or Bluetooth in order to be able to communicate with each other and in order to control the transport of the tray holder 1300 and the baking and proofing processes in a synchronized manner.

The first heat treatment chamber 1100 may be, according to an embodiment, configured to bake food and the second heat treatment chamber 1200 may be configured to proof food. The second heat treatment chamber 1200 may execute the role of the first heat treatment chamber 1100 and vice versa. The proofing and baking process may be adapted accordingly.

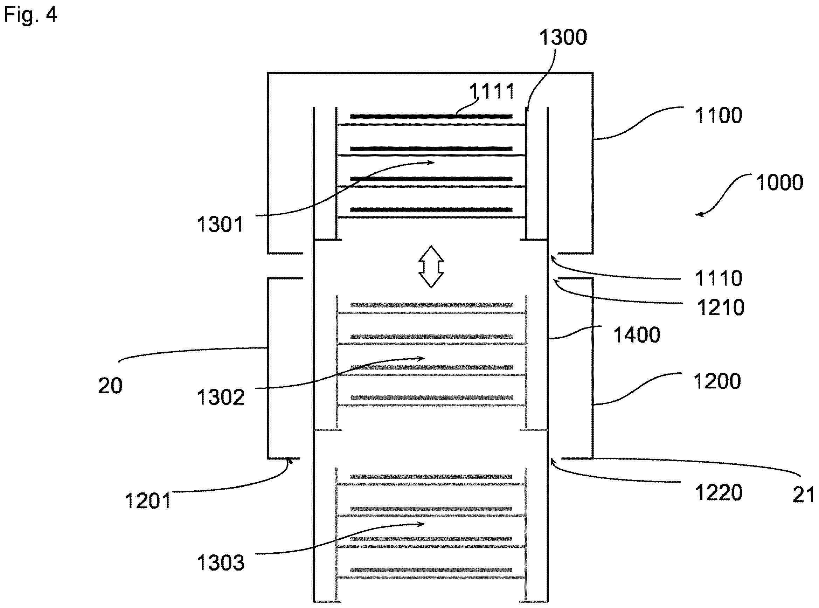

Fig. 4 illustrates a heat treatment system 1000, wherein the second heat treatment chamber 1200 has a third opening 1220 at a base part 21 thereof, and the elevation apparatus 1400 is configured to reciprocally transport the tray holder 1300 between the first position 1301, the second position 1302 and a third position 1303 below the second heat treatment chamber 1200 through the first opening 1110 and the second opening 1210 and the third opening 1220.

The third opening 1220 may be similar to the first opening 1110 in shape and dimension.

When being in the third position 1303, the tray holder 1300 may be 1m or 50cm or 10cm or 1cm below the second heat treatment chamber 1200. According to an embodiment, when being in the third position 1303, the tray holder may be entirely below the second heat treatment chamber 1200. The upper side of the tray holder 1300 may then overlap with the base part 11 of the first heat treatment chamber 1100 in a lateral direction. According to an embodiment, the third position 1303 is centered below the third opening 1220.

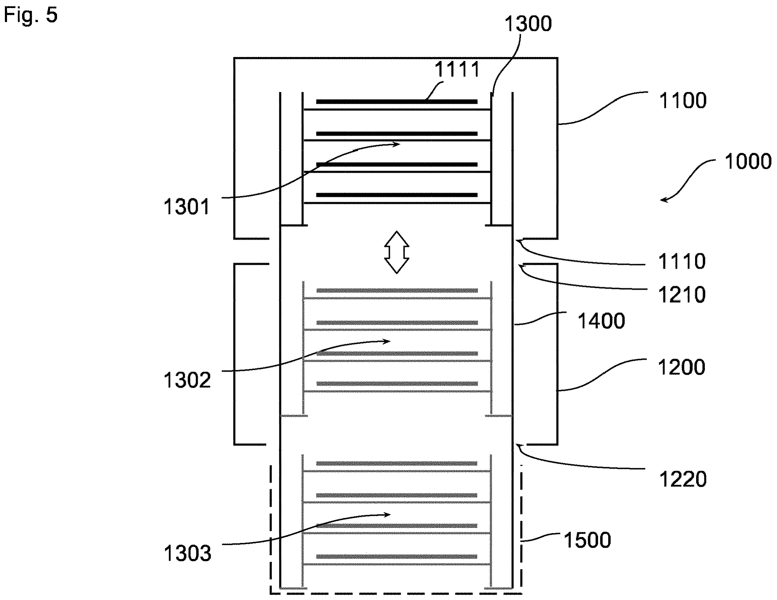

Fig. 5 illustrates a heat treatment system 1000 according to an embodiment that comprises a rack system 1500 for accommodating the tray holder 1300, wherein the rack system 1500 is placed below the second heat treatment chamber 1200, and the third position 1220 is within the rack system 1500.

The rack system 1500 may be similar to the one of Fig. 2. When being in the third position 1303, the tray holder 1300 may entirely be within the rack system 1500.

According to an embodiment, the rack system 1500 is movable by an operator.

The rack system 1500 may be movable via a driving unit that is controlled by an operator. The rack system 1500 may have rolls or wheels and may be movable by an operator who pulls and/or pushes the rack system 1500 to and from a position under the second heat treatment chamber 1200.

In this embodiment, food on trays 1111 on the tray holder 1300 may be lifted from the third position 1303 to the second position 1302 within the proofing chamber 1200. After having been proofed, the food on trays 1111 on the tray holder 1300 may then be lifted into the first position 1301 within the heat treatment chamber or oven 1100. After the baking program having finished, the food on trays 1111 on the tray holder 1300 may then be lowered back to the third position 1303 within in the rack system 1500. The rack system 1500 may then be removed by the operator for unloading the freshly baked food from the trays and for reloading the rack system 1500 with new, unbaked food.

This embodiment is beneficial because the tray holder 1300 with the trays 1111 may be loaded and unloaded in a place and in a position comfortable for the operator. When finished, the operator may then position the rack system 1500 under the second heat treatment chamber 1200 and start the proofing/baking process.

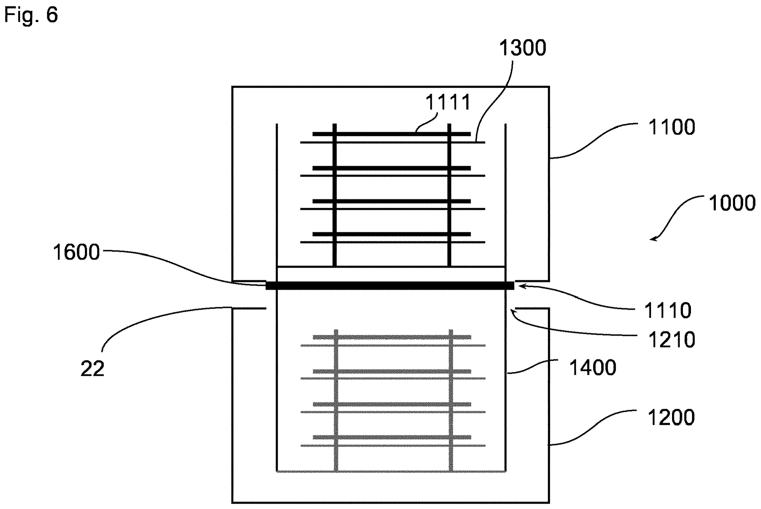

Fig. 6 illustrates a heat treatment system 1000, according to an embodiment, that comprises a dividing piece 1600 between the first heat treatment chamber 1100 and the second heat treatment chamber 1200 having a closed position and an opened position. When being in the opened position, the dividing piece 1600 allows the tray holder 1300 to be moved reciprocally between the first position 1301 and the second position 1302 through the first opening 1110 and the second opening 1210, and when being in the closed position, the dividing piece 1600 closes the first opening 1100.

The dividing piece 1600 may be arranged between the upper part 22 of the second heat treatment chamber 1200 and the base part 11 of the first heat treatment chamber 1100.

The dividing piece 1600 may seal the first heat treatment chamber 1100 against cold air from outside and may serve as isolation so that no hot air may leak out of the first heat treatment chamber 1100. The heat treatment chamber 1100 may also serve as a vacuum seal.

The dividing piece 1600 may close the first opening 1110 so as to prevent hot air from streaming out of the first heat treatment chamber 1100. The dividing piece 1600 may serve as an air and pressure seal for the first heat treatment chamber 1100. This may be achieved by a seal, e.g. made out of rubber or the like, disposed on the border of the dividing piece 1600.

At the same time, the dividing piece 1600 may open and close the second opening 1210 of the second heat treatment chamber together with first opening 1110.

There may be a similar dividing piece 1600 arranged at the third opening 1220 of the second heat treatment chamber 1200.

The dividing piece 1600 may further reduce the hot air leaking from the first heat treatment chamber 1100 during the heat treatment process, therefore increasing energy saving.

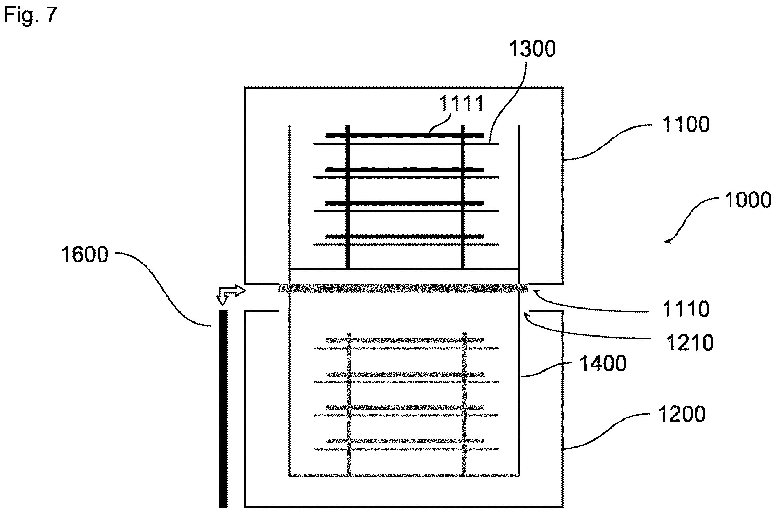

Fig. 7 shows a heat treatment system 1000, according to an embodiment, where the dividing piece 1600 is configured to be stored behind the heat treatment system 1000 when being in the opened position.

"Behind the heat treatment system 1000" may be defined as the side of the heat treatment system 1000 that is not accessible under normal circumstances by an operator. It may further be defined as the side opposite to the doors and/or windows of the heat treatment chambers 1100 and 1200.

The dividing piece may be stored behind the first heat treatment chamber 1100 and/or the second heat treatment chamber 1200.

In another embodiment, the dividing piece 1600 may be stored at any side of the first heat treatment chamber 1100 and/or the second heat treatment chamber 1200.

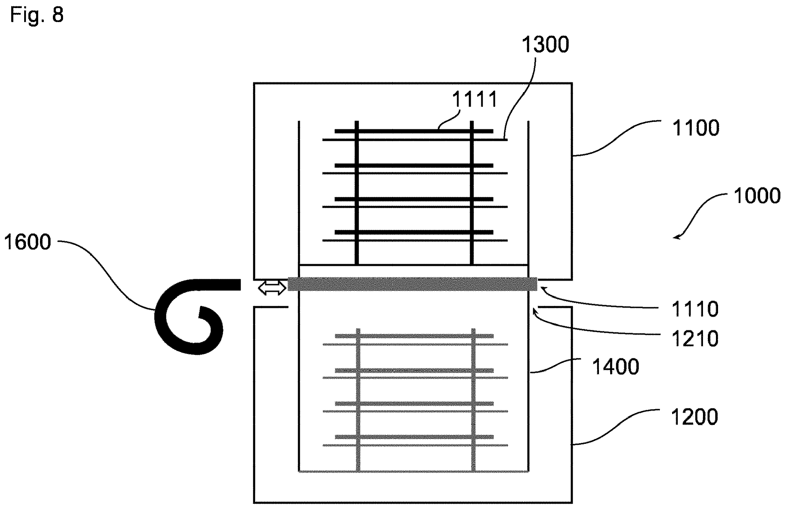

Fig. 8 illustrates a heat treatment system 1000, according to an embodiment, where the dividing piece 1600 is configured to be stored in a rolled shape.

In order to save space, the dividing piece 1600 may be stored in a rolled shape. The dividing piece 1600 may therefore be made out of a flexible material. Alternatively, the dividing piece 1600 may be composed out of segments, the segments being coupled together via hinges or other means so as to form a dividing piece that is rollable and/or foldable. The dividing piece 1600 may be similar to a sun roof.

According to an embodiment, there may be a second dividing piece similar to the first dividing piece 1600 that opens and closes the second opening 1210 in the upper side 1202 of the second heat treatment chamber 1200.

According to an embodiment, there may be a third dividing piece similar to the first dividing piece 1600 that opens and closes the third opening 1220 in the bottom side 1201 of the second heat treatment chamber 1200.

The dividing piece 1600 may, according to one embodiment, be arranged to also open and close the second opening 1210 in the upper part 22 of the second heat treatment chamber 1200 at the same as the first opening 1110.

Storing the dividing piece in a rolled shape behind the heat treatment system saves space and reduces clutter and obstruction for operators.

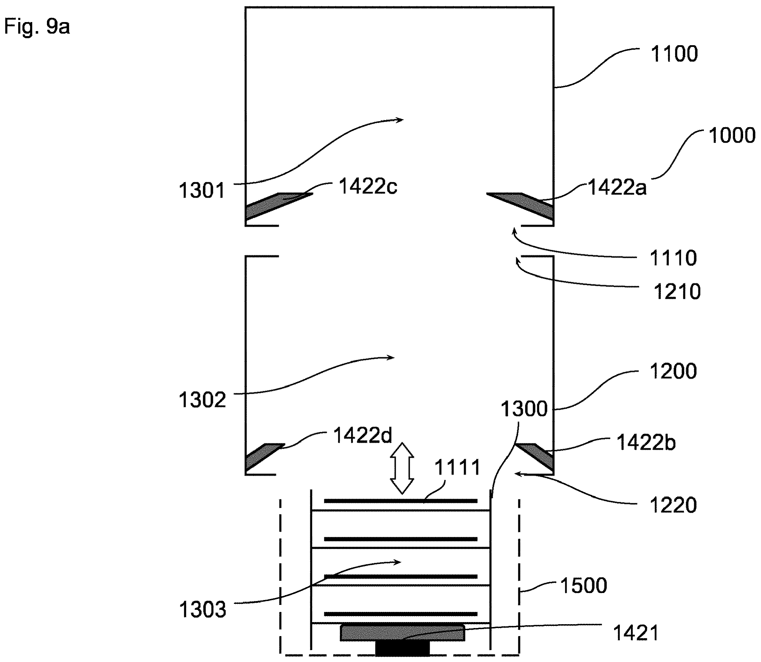

Fig. 9A to 9C illustrate a heat treatment system 1000, according to an embodiment, wherein the elevation apparatus comprises a hydraulic plunger 1421 arranged at the rack system 1500 and adapted to lift and lower the tray holder 1300.

The hydraulic plunger 1421 may be disposed inside the rack system 1500.

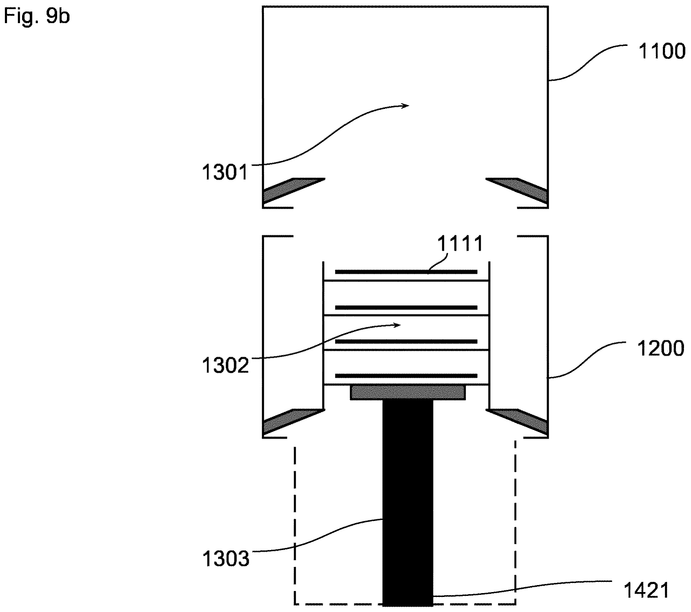

The hydraulic plunger 1421 may be configured to move the tray holder 1300 in a vertical direction reciprocally between the first position 1301 (Fig. 9A), the second position 1302 (Fig. 9B) and the third position 1303.

At least one holding element 1422a to 1422d may be disposed inside the first heat treatment chamber 1100 and/or the second heat treatment chamber 1200. The holding elements 1422a to 1422d may be configured to hold the tray holder 1300 in the first position 1301 (Fig. 9B) and/or in the second position 1302, respectively. The holding elements 1422a to 1422d may have, according to an embodiment, a stored position, in which the interference with the movement of the tray holder 1300 is minimized, as shown in Fig. 9A. The holding elements 1422a to 1422d may be retracted, or folded or may be in a hinged position. The holding elements 1422a to 1422d may further have a holding position, in which they are arranged so as to hold the tray holder 1300 in the first position 1301, as shown in Fig. 9B, and/or in the second position 1302, respectively.

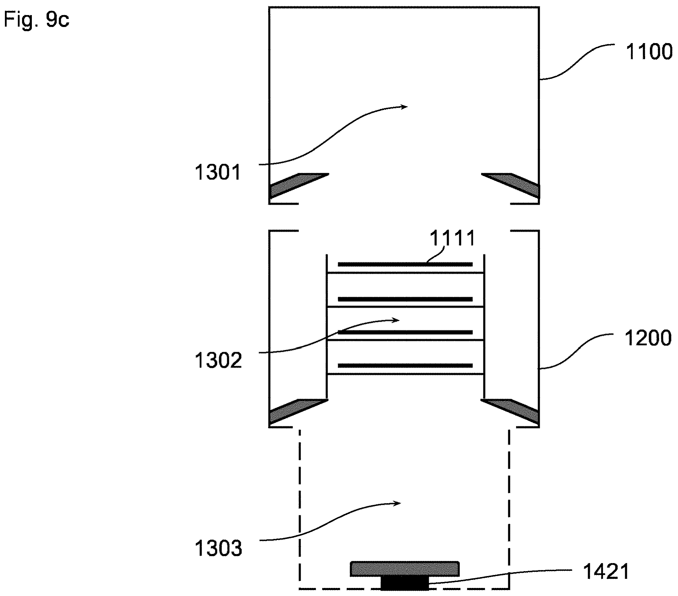

The hydraulic plunger 1421 may lift the tray holder from the third position 1303 within the rack system 1500 (Fig. 9C) to the second position 1302 inside the second heat treatment chamber 1200. The holding elements 1422 b and 1422 d may then be moved from a stored position to a holding position in order to hold or support the tray holder 1300 in the second position 1302, as shown in Fig. 9B. The hydraulic plunger may then retract back into its original position at the rack system 1500 and the third opening 1220 and/or the second opening 1210 and/or the first opening 1110 may then be closed, e.g. by one or more dividing pieces 1600 or other means respectively. The proofing and or baking process may then be started inside the second heat treatment chamber 1200. A similar transport of the tray holder 1300 into the first position within the first heat treatment chamber 1100 is possible, involving the holding elements 1422a and 1422c. The transport process including the control of the hydraulic plunger 1421 and the holding elements 1422 may be controlled by a control unit or an operator or the control apparatuses of the first heat treatment machine 10 and the second heat treatment machine 20.

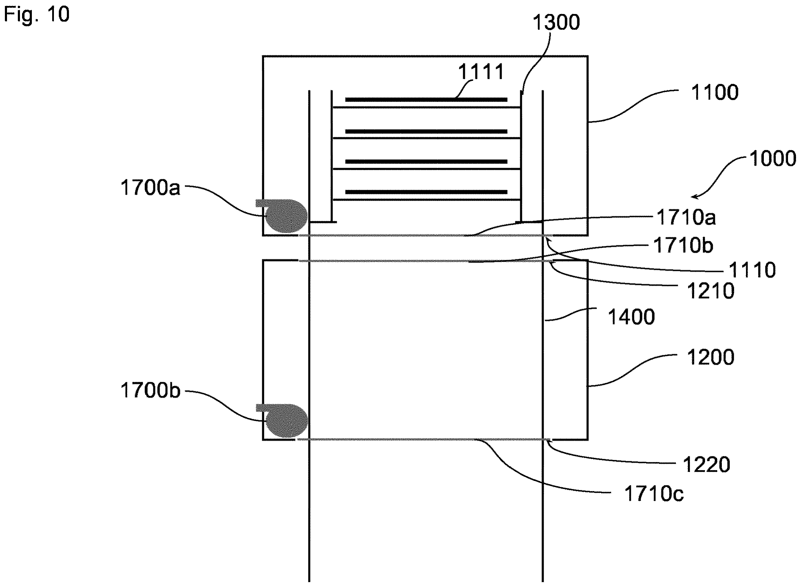

As shown in Fig. 10, according to an embodiment, the heat treatment system 100 may further comprise at least one vacuum pump 1700a and 1700b that is configured to reduce the air pressure in the first heat treatment chamber 1100 and/or the second heat treatment chamber 1200.

The first heat treatment chamber 1100 and the second heat treatment chamber 1200 may be sealed by at least one seal 1710a to 1710c, respectively, and may be air pressure resistant. The seal 1710a to 1710c may be air pressure resistant itself.

After the heat treatment in the first heat treatment chamber 1100, the tray holder 1300 may be lowered into the second heat treatment chamber. When air is pumped out of the second heat treatment chamber 1200, the boiling point of the food on the trays 1111 is lowered. This may be used to continue the heat treatment or baking in the second heat treatment chamber 1200. This may lead to a more energy and time preserving and therefore more efficient heat treatment or baking or proofing. This may be used for vacuum baking. After the heat treatment in the second heat treatment chamber, the food or goods on the trays 111 on the tray holder 1300 may be handwarm.

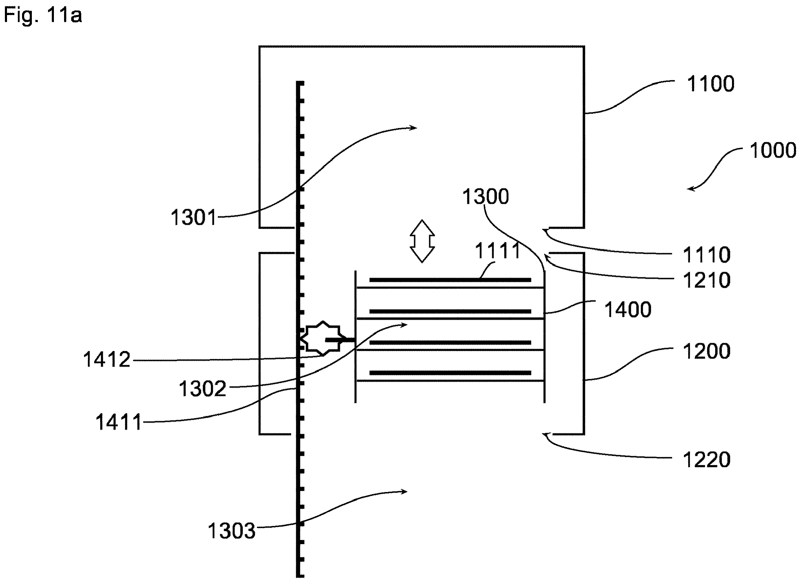

As shown in Fig. 11A, according to an embodiment, the elevation apparatus 1400 may comprise a rack and pinion. The rack 1411 may be disposed on the inner side of the first heat treatment chamber 1100 and/or the second heat treatment chamber 1200. The rack 1411 may be disposed vertically. The pinion 1412 may be disposed on the tray holder 1300 so as to engage with the rack 1411.

When a rotational motion is applied on the pinion 1412, the tray holder 1300 may be forced on a movement along the rack 1411. The movement may be along a vertical direction. The movement may lift and/or lower the tray holder 1300. Thus, the tray holder may be transported reciprocally between the first position 1301 and the second position 1302 and the third position 1303. The rack 1411 may exceed the bottom side 1201 of the second heat treatment chamber 1200 or the bottom side of 1101 of the first heat treatment chamber 1100. According to an embodiment, there may be disposed a plurality of racks and pinion pairs on the inner side of the first heat treatment chamber 1100 and/or the second heat treatment chamber 1200 in order to achieve a more stable and steady movement of the tray holder. Additionally, there may be provided guiding rails.

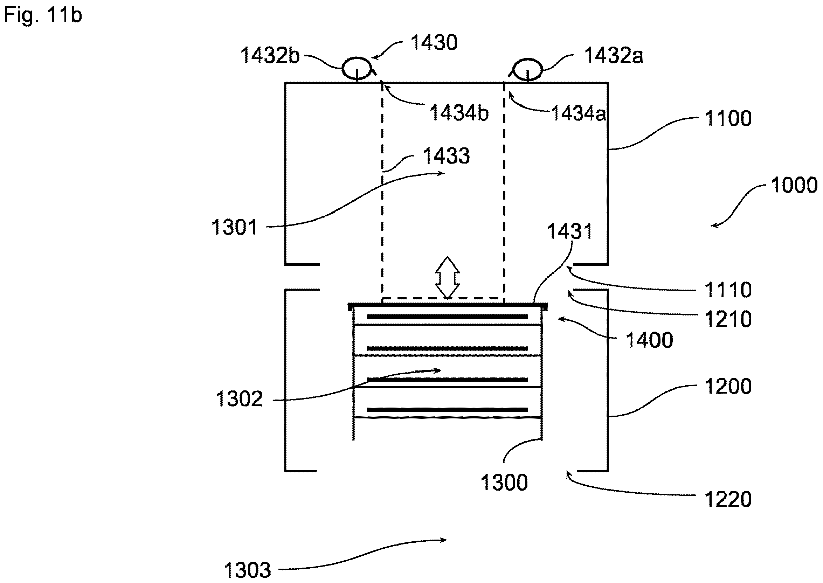

As shown in Fig. 11B, the elevation apparatus 1400 may, according to an embodiment, comprise a tackle means 1430. The tackle means 1430 may comprise at least one fixed pulley 1432a to 1432b. The at least one fixed pulley 1432a to 1432b may be disposed on the inner side of the first heat treatment chamber 1100. In a further embodiment, the at least one fixed pulley 1432a to 1432b may also be disposed on the outer side of the first heat treatment chamber 1100.

The tackle means 1430 may further comprise a cable and/or rope and/or chain 1433 threaded 1433 through the at least one fixed pulley 1432a to 1432b and may be attached to a movable mount 1431. The movable mount 1431 holds the tray holder 1300. The movable mount 1431 is detachably connected to the tray holder 1300. The movable mount 1431 may be connected to the tray holder 1300 before the proofing process and/or baking process is started and before the tray holder 300 is transported by the elevation apparatus and may be disconnected from the tray holder 1300 after the proofing process and/or baking process has finished. The connection between the movable mount 1431 and the tray holder 1300 may be established by clasps or the like or via an electromagnetic connection.

The cable and/or rope and/or chain 1433 may be, according to an embodiment, attached to a pulling mechanism such as a motorized roll, wire pull or the like or may be pulled by an operator. In another embodiment, the at least one fixed pulley 1432a to 1432b is turned by a motor or other driving means. The motor or other driving means may be controlled by a control unit or by the control apparatus of the first heat treatment machine 1100 or the control apparatus of another heat treatment machine.

When the cable and/or rope and/or chain 1433 is pulled or the at least one fixed pulley 1432a to 1432b is turned in a first direction, the tackle means may translate the pulling into a movement of the movable mount 1431 and subsequently into a movement of the tray holder 1300. The movement of the tray holder 1300 may be, according to an embodiment, a vertical movement. According to an embodiment, the tray holder 1300 may be lifted when the cable and/or rope and/or chain 1433 is pulled or the at least one fixed pulley 1432a to 1432b is turned in a first direction.

The pulling mechanism may, according to an embodiment, be adapted to also release the cable and/or rope and/or chain 1433 in a controlled manner or the at least one fixed pulley 1432a to 1432b is also turned in a second direction, leading to an opposite movement of the movable mount 1431 and subsequently a movement of the tray holder 1300. In this case, the tray holder 1300 may be lowered.

The cable and/or rope and/or chain 1433 may be directly attached to the movable mount 1431. The attachment may be permanent, e.g. glued, knotted, or detachable. According to an embodiment, there may be provided at least one attachment element disposed on the moving element 1431, e.g. a hook, claps or the like, or a loop or the like.

If at least one fixed pulley 1432a to 1432b is disposed on the outer side of the first heat treatment chamber 1100 the cable and/or rope and/or chain 1433 may be threaded through at least one opening 1434a to 1434b of the first heat treatment chamber 1100 to the attachment disposed at the tray holder 1300. The at least one opening 1434a to 1434b may be a passage or a hole. The diameter of the passage or the hole may be in a range between 10cm and 5cm or between 10cm and 1cm. The passage or hole may have a seal, e.g. out of rubber, in order to prevent hot hair from streaming out of the first heat treatment chamber 1100.

The at least one fixed pulley 1432a to 1432b may also be disposed at the second heat treatment chamber 1200.

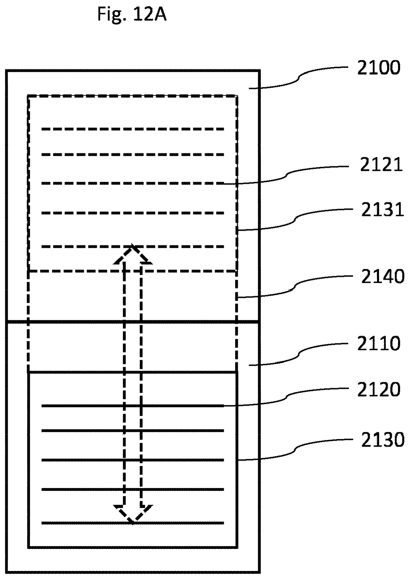

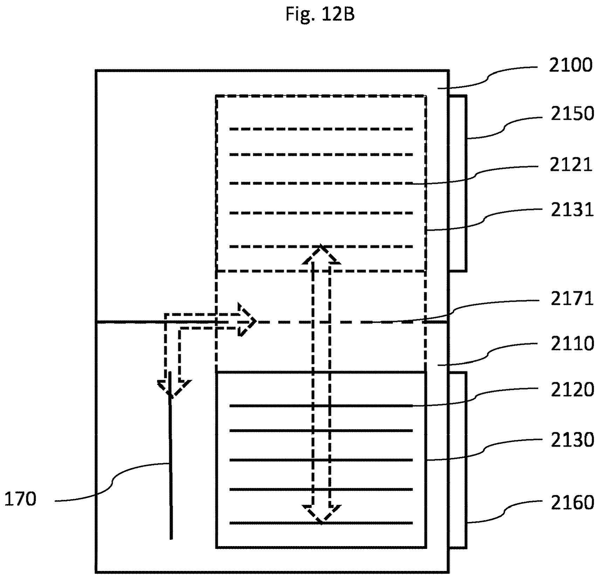

Figs. 12A and 12B illustrate a heat treatment system 2100 in combination with a rack system 2110 with a retractable dividing piece 2170 that if removed may open according to an embodiment of the present invention an opening 2171 between heat treatment system 2100 and rack system 2110. On an elevation system 2140 a tray holder 2130 may load and unload the heat treatment system 2100 with at least one tray 2120. Thus, the tray holder may be moved up into a position within the heat treatment machine 2131 exposing placed food on the trays to heat treatment 2121. According to an embodiment of the present invention the tray holder 2120 may move up and down or reciprocate vertically like an elevator through the opening 2171 after the retractable dividing piece 2170 has opened and according to an embodiment of the present invention rotated into a space saving position behind the tray holder 2130. The heat treatment system 2100 may have a front door 2150. The rack system 2110 may have a front door 2160 or an opening to the front. Fig. 12A illustrates a schematic cross-sectional front view of the heat treatment system 2100 and the rack system 2110, while Fig. 12B illustrates a schematic side view thereof.

The first heat treatment chamber 1100 and/or the second heat treatment chamber may have a front door or front window or front opening. According to an embodiment, the front door may have a door window. The window and/or door window may be out of glass or a transparent, heat resistant material.

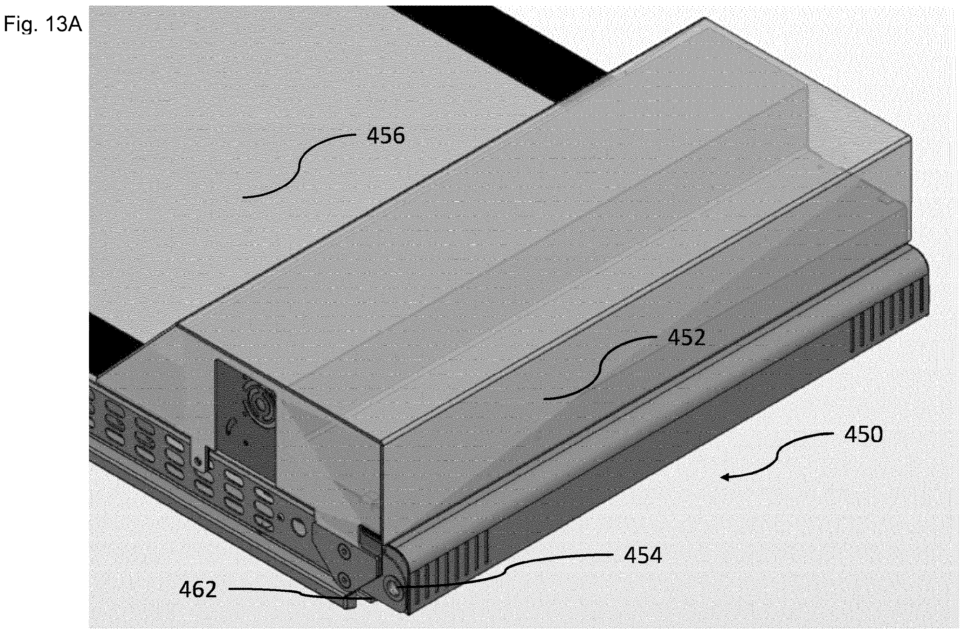

Fig. 13A shows a schematic perspective view of a monitoring apparatus 450 of an embodiment of the present invention attached to a door window of a heating chamber. The monitoring apparatus 450 may be mounted to a heating apparatus as shown in Fig. 3, for example to the oven door window 330 of the deck oven 310. The monitoring apparatus 450 may be further adapted to be mounted to an outside window 235 of a heat treatment chamber 120 as shown in Fig. 1A, 1B and 2C. As described above, a visual sensor such as a camera or an array of photodiodes 260 may be integrated at the outside of any of these glass panels or windows 236, 237 and 235. The visual sensor and the array of photodiodes may have an optical sensitivity in the visible light spectrum and in the infrared light spectrum. The visible spectrum may be between 490nm and 790nm. The infrared spectrum may be between 760 nm and 2500 nm. The outside window 235 may be, according to an embodiment, tinted or darkened. However, the monitoring apparatus 450 may also be mounted to a triple glass window, which has no darkened or tinted window. The reduction of internal reflections may be then achieved by a blind and/or a monitoring apparatus cover with a darkened inner surface as will be discussed in the following.

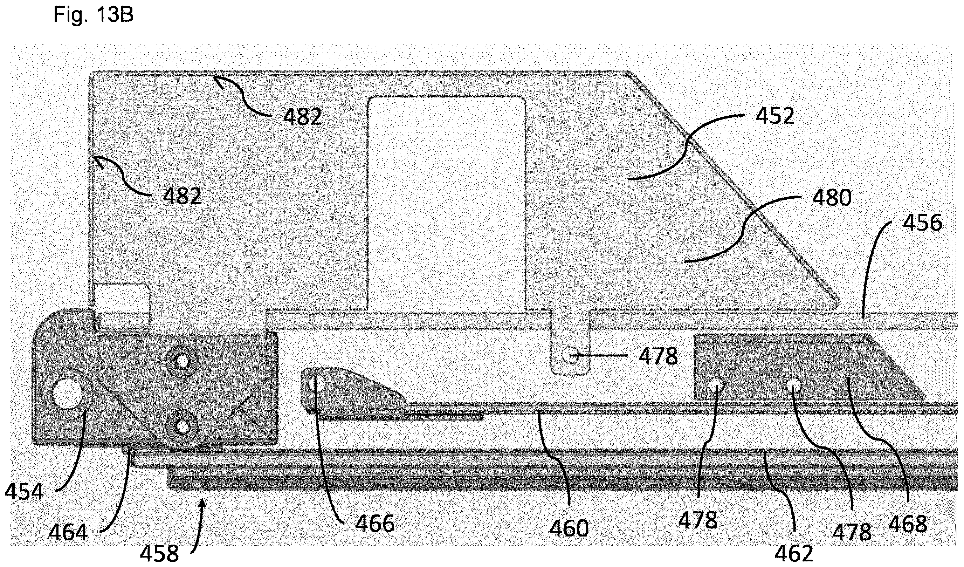

The monitoring apparatus comprises, as shown Fig. 13A to 13F, a monitoring apparatus cover 452, which is fixed to a door mount 454, which is adapted to replace an original door mount of a heat treatment device door like an oven door. The monitoring apparatus 450 is attached outside of an outside window 456 of a triple glass window 458 comprising an outside window 456, a middle window 460, and an inside window 462. The outside window 456 and the middle window 460 can be pivoted to an outside by means of a first hinge 464 and a second hinge 466, respectively, to enable a cleaning of the interior between the inside window 462 and the middle window 460, and to enable a cleaning of the interior between the middle window 460 and the outside window 456. A blind 468 is mounted between the middle window 460 and the outside window 456 at an edge portion of the monitoring apparatus cover 452 to reduce reflections of light passing the outside window 456 and being reflected at the middle window 460 and/or the inside window 462 towards the inside of the monitoring apparatus cover 452 of the monitoring apparatus 450. Fig. 13B shows a side view of the monitoring apparatus 450 of Fig. 13A and the blind 456 mounted between the outside window 456 and the middle window 460 of a triple glass window of a door of a heating chamber. The monitoring apparatus may also be mounted to a double glass window or a single glass window and is not limited to be attached to a triple glass window 458.

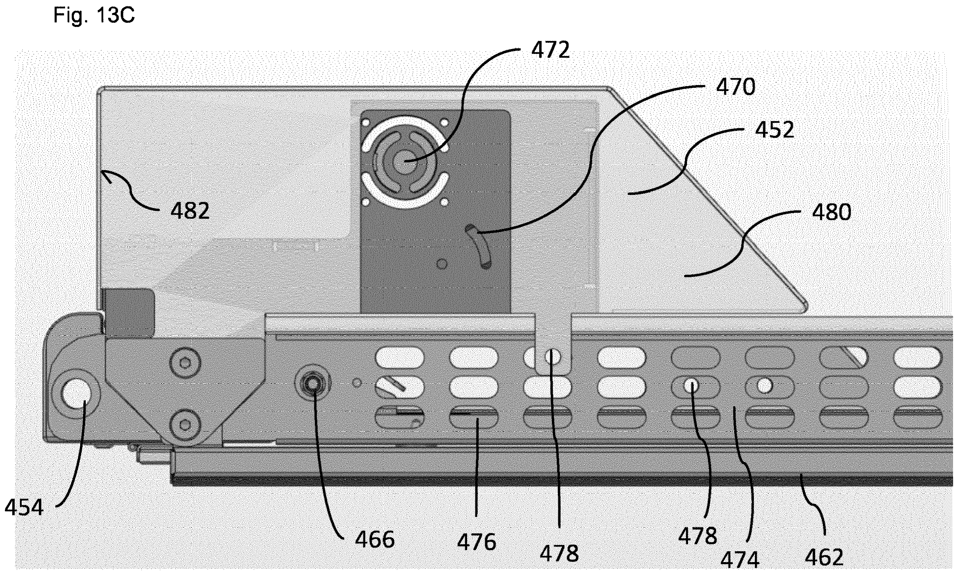

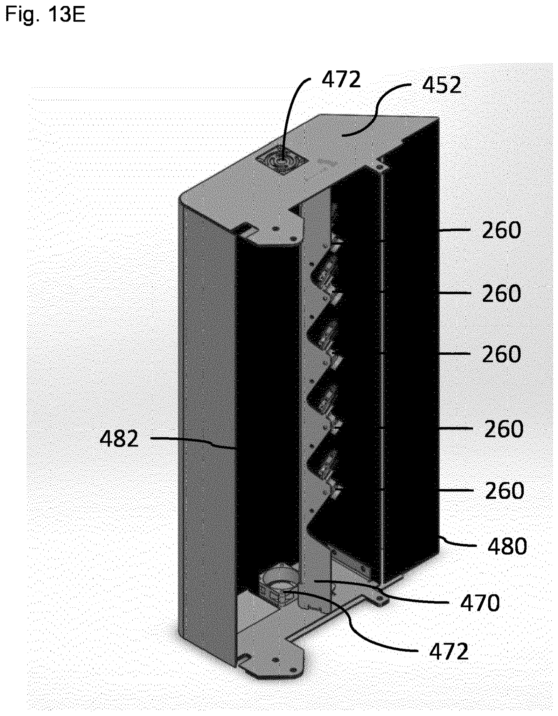

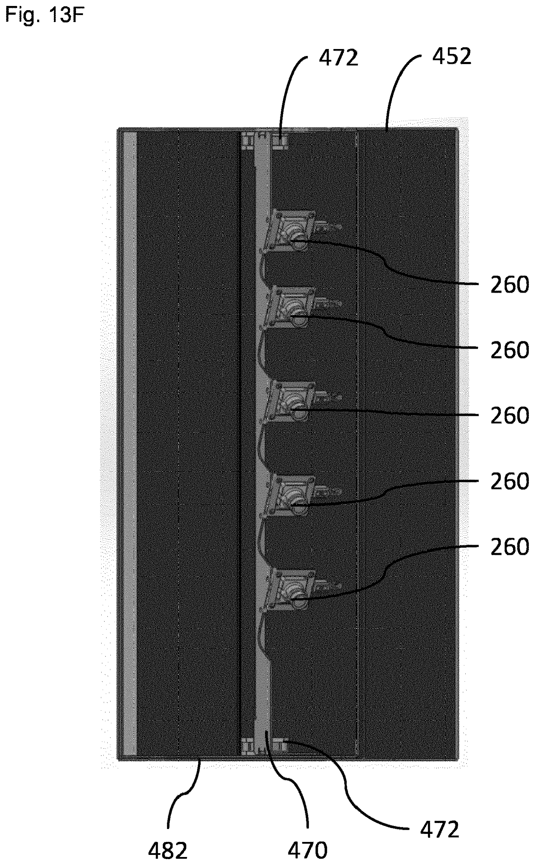

Fig. 13C shows a side view of the monitoring apparatus of Fig. 13A and the blind 468 mounted between an outside window 456 and a middle window 460 of a triple glass window of a door of a heating chamber, wherein a visual sensor holder or a photodiode array mounting 470 is mounted and installed in the monitoring apparatus 450. The visual sensor holder or photodiode array mounting 470 is shown in all detail in Fig. 13E and 13F.

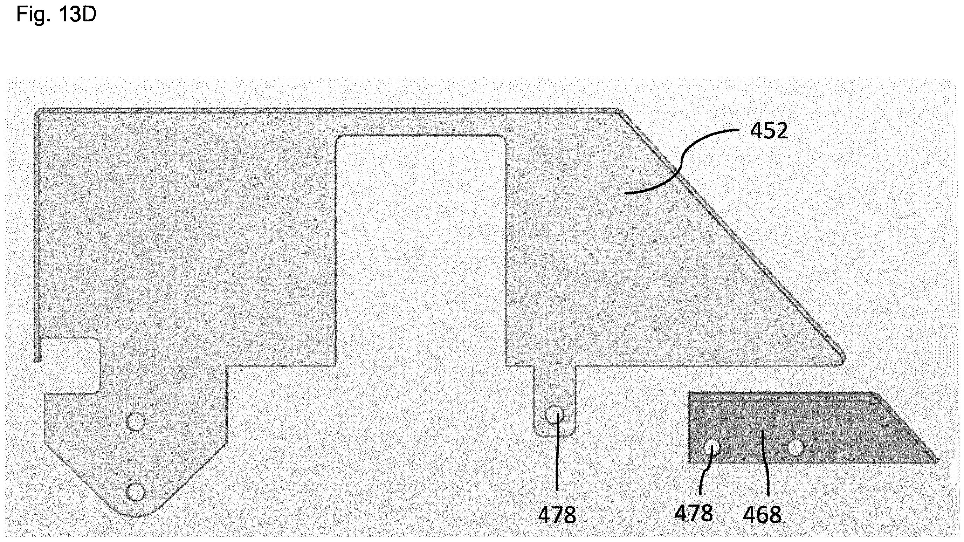

Fig. 13D shows the monitoring apparatus cover 452 of the monitoring apparatus 450 and the blind 468 of Fig. 13B in detail, wherein Fig. 13E shows an inside of the monitoring apparatus 450 having the visual sensor holder or photodiode array mounting 470 having an array of visual sensors or arrays of photodiodes 260 to observe the inside of the heating chamber, wherein the inside surface of the monitoring apparatus cover 452 is darkened to reduce reflections. Fig. 13F shows a detailed plan view of the monitoring apparatus 450 of Fig. 13E. A fan 472 may be provided to ventilate the interior of the monitoring apparatus cover 452. Herein, two fans 472 may be mounted at opposite sides of the monitoring apparatus cover 452 to guide cooling air from an air inlet side to an air outlet side. The two fans 472 at opposite sides may be also operated to both guide filtered air inside the monitoring apparatus cover 452 to generate an enhanced pressure inside the monitoring apparatus cover 452, thus dust is prevented from entering the monitoring apparatus cover 452. The illumination of the heating chamber may be provided inside of the heating chamber. A side cover 474 may be provided to cover the triple glass window 458 of the door of the heating chamber. To provide an air exchange in an area between the middle window 460 and the outside window 456, the side cover 474 may be provided with openings 476. The openings 476 may be used to mount the monitoring apparatus cover 452 and the blind 468 by means of fixing holes 478 by a screw coupling.

As can be seen from Fig. 13E, five visual sensors or five arrays of photodiodes 260 are mounted to the visual sensor holder or photodiode array mounting 470 in a tilted manner, to enable an observation of five trays in the heating chamber being loaded with food to be heated. The mounting angle with regard to a horizontal direction (downwards) may be in a range of 10° to 45°, or 15° to 30°, or 20° to 25°.

Next to the visual sensor holder or photodiode array mounting 470, a separate housing 480 may be provided within the monitoring apparatus cover 452, to accommodate a control circuit or a processing unit for monitoring or analyzing the heating process. As can be seen from Fig. 13E, the inside surface 482 of the monitoring apparatus cover 452 next to the visual sensors or arrays of photodiodes 260 is darkened or has a dark or black color. This can be achieved by coating the inside with a dark colored or black cover such as a dark colored or a black paint coating. The inside surface may also be covered by a dark colored or black plastic film or a dark colored or black resin. The reduction of reflections from the inside surface of the monitoring apparatus cover 452 may further enhanced by a roughened inside surface coated by a dark colored or black paint coating.

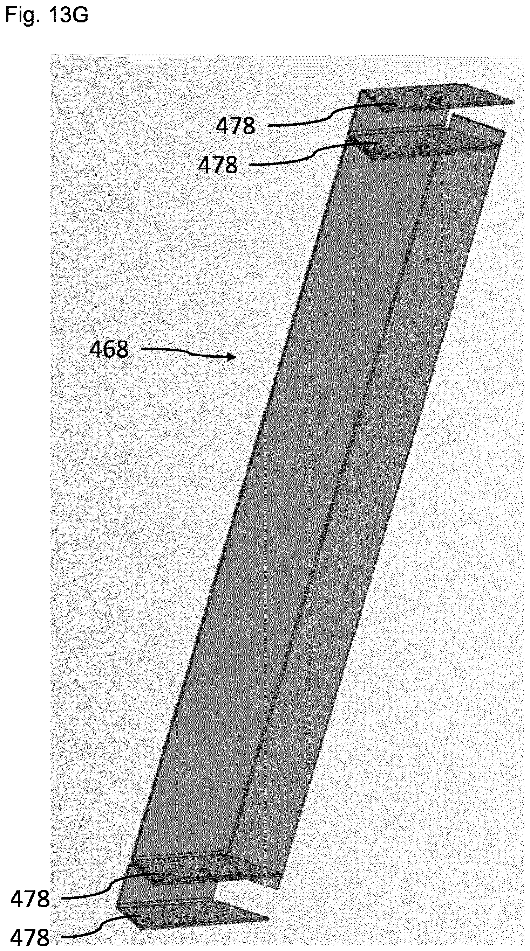

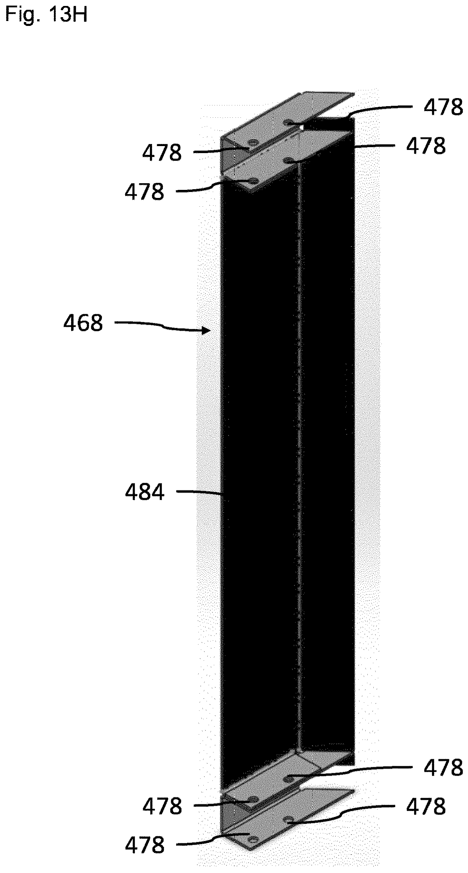

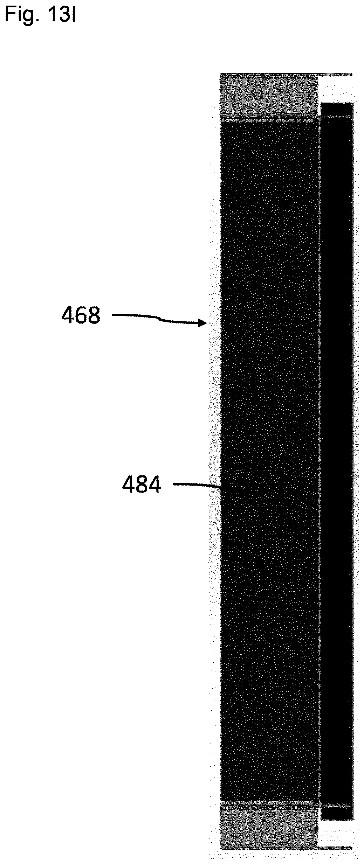

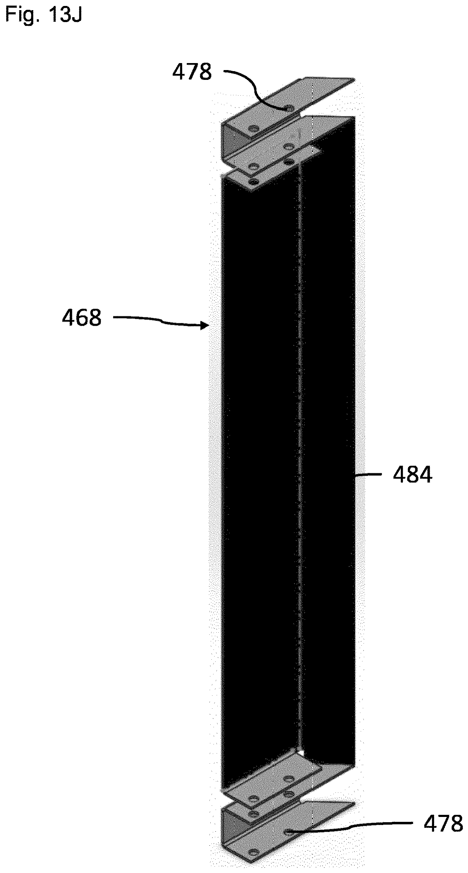

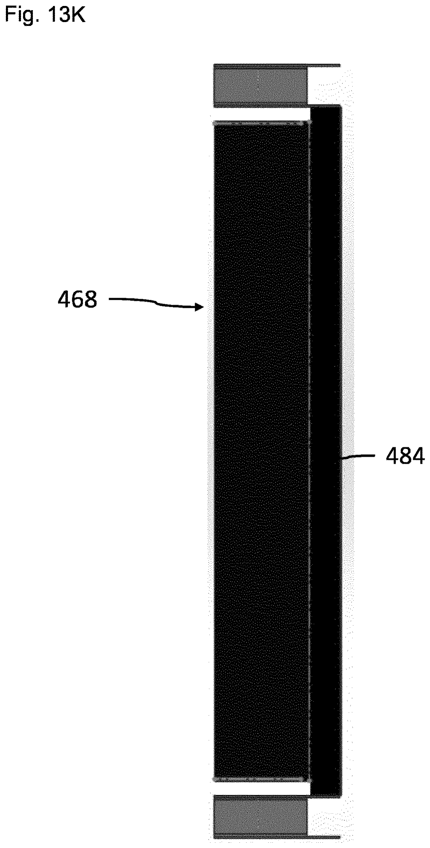

Fig. 13G shows a perspective view of the blind 468 of Figs. 13C and 13D, Fig. 13H shows an perspective view of the blind 468 of Figs. 13C and 13D having a darkened inside surface 484 to reduce internal reflections according to an embodiment, Fig. 13I shows a plan view of the blind 468 of Figs. 13C and 13D having a darkened inside surface 484 to reduce internal reflections according to an embodiment, Fig. 13J shows an perspective view of the blind 468 of Figs. 13C and 13D having a darkened inside surface 484 to reduce internal reflections according to an embodiment, and Fig. 13K shows a plan view of the blind 468 of Figs. 13C and 13D having a darkened inside surface 484 to reduce internal reflections according to an embodiment. The inside surface 484 of the blind 468 may be darkened in a same way as described with regard to the inside surface 482 of the monitoring apparatus cover 452, to reduce internal reflections.

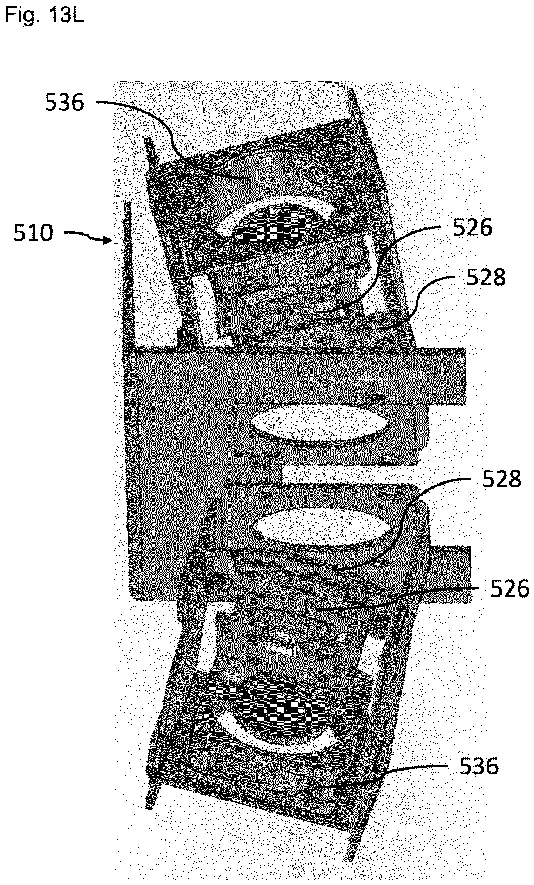

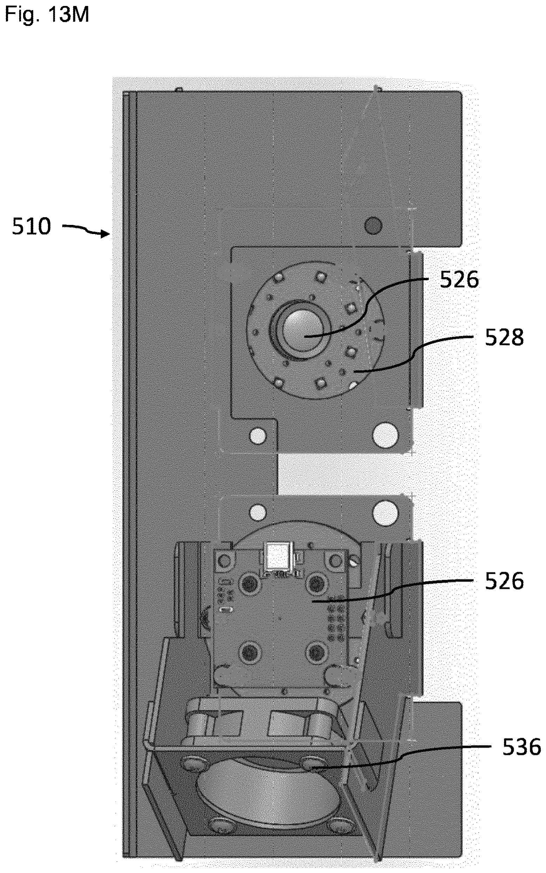

Fig. 13L shows a perspective view of a heating chamber visual sensor holder or photodiode array mounting 510 to be mounted above the middle of a tray holder inside a heating chamber, and Fig. 13M shows a plan view of a visual sensor holder or photodiode array mounting 510 of an embodiment of the present invention to be mounted above the middle of a tray holder of a heating chamber. The heating chamber visual sensor holder or photodiode array mounting 510 comprises two visual sensors or two arrays of photodiodes 526, which observe food to be heated below the visual sensors or arrays of photodiodes 526 from opposite directions, at least one light source 528, and the cooling device 536. The visual sensor holder or photodiode array mounting 510 is preferably located at the top of a rack, above a middle tray holder. If the rack has two or more columns of tray holders, the sensor system such as at least one visual sensor or at least one array of photodiodes may be mounted in a central top location. This prevents long installation times and is not hindering when trays are being placed in the rack system.

According to another embodiment, the door open time may be included as another type of feature data. The longer the door to the heat treatment chamber is open, the more the internal temperature of the heat treatment chamber drops. Thus, the door open time has a significant influence to the baking or proofing procedure due to its influence on the inside temperature of the heat treatment chamber.

In another embodiment of the invention, the heat treatment chamber 1100 or 1200 may be automatically set to a pre-heat temperature. To achieve this, in a first step, food that is being placed in the rack system 1500 that may be attached to the heat treatment device such as an oven or a proofer or be independently on a transport rack or a wall mount or independent mounting must be captured by a visual sensor or a light barrier or a sensor barrier. The resulting data may be compared with reference data and a classifying technique such as a k nearest neighbor algorithm. From previously learned data labeling or classification classes, predefined actions such as starting a baking program or a proofing program or a heat treatment machine may be executed. This can be used for automatic preheating in an oven or a proofer or a cooking device. This sensor mounting may be placed near but independently from a transport rack, this way one transport rack after another may be passing the sensor system. It is further of advantage to include a scale or weight sensor into the rack system 1500 that may be combined with a visual sensor or an array of photodiodes or light barrier. By taking the tray weights before and after baking, another reference is gathered to evaluate the baking result. The relative weight loss may then be used as a feedback for the machine learning algorithms or as reference data. If no proofer is available a common trick is to place saran wrap placed on top of the food tray. If colored saran wrap is used this may be of advantage in image processing.

In another embodiment of the invention, the graphical user interface (GUI) may be displayed on a device that is independent movable from the heat treatment machine such as a smart phone or a tablet. On the same device or a remote device such as a PC connected by an internet connection, the inside of the heat treatment chamber may be displayed. Thus, the user may have a view into the heat treatment chamber from a remote location.

Support for the claims and further information is defined in the following itemized list:
1. A heat treatment system (1000), comprising
   a tray holder (1300) with at least one tray (1111) for placing goods to be heated,
   a first heat treatment machine (10) having a first heat treatment chamber (1100) adapted to accommodate the tray holder (1300), the first heat treatment chamber (1100) having a first opening (1110) in a base part (11) thereof, and
   an elevation apparatus (1400) configured to transport the tray holder (1300) between a first position (1301) within the first heat treatment chamber (1100) and a second position (1302) below the first heat treatment chamber (1100) through the first opening (1110).
2. The heat treatment system according (1000) to item 1, further comprising a rack system (1500) for accommodating the tray holder (1300), wherein
   the rack system (1500) is arranged below the first opening (1110), and
   the second position (1302) is within the rack system (1500).
3. The heat treatment system (1000) according to item 1, further comprising a second heat treatment machine (20) having a second treatment chamber (1200) adapted to accommodate the tray holder (1300), the second heat treatment chamber (1200) having a second opening (1210) in an upper part (22) thereof, and wherein
   the second heat treatment chamber (1200) is arranged below the first heat treatment chamber (1100),
   the second position (1302) is within the second chamber (1200), and
   the elevation apparatus (1400) is configured to reciprocally transport the tray holder (1300) between the first position (1301) and the second position (1302) through the first opening (1110) and the second opening (1210).
4. The heat treatment system (1000) according to item 3, wherein
   the second heat treatment chamber (1200) has a third opening (1220) in a base part (21) thereof, and
   the elevation apparatus (1400) is configured to reciprocally transport the tray holder (1300) between the first position (1301), the second position (1302) and a third position (1303) below the second heat treatment chamber (1200) through the first opening (1110) and the second opening (1210) and the third opening (1220).
5. The heat treatment system (1000) according to item 4, further comprising a rack system (1500) for accommodating the tray holder (1300), wherein
   the rack system (1500 is arranged below the third opening (1220), and
   the third position (1303) is within the rack system (1500).
6. The heat treatment system (1000) according to item 2 or 5, wherein
   the rack system (1500) is movable by an operator.
7. The heat treatment system (1000) according to any of items 3-6, further comprising a vacuum pump (1700) configured to reduce the air pressure in at least one of the first heat treatment chamber (1100) and the second heat treatment chamber (1200).
8. The heat treatment system (1000) according to any of items 3-7, wherein
   the first heat treatment machine (10) is configured to bake food, and
   the second heat treatment machine (20) is configured to proof food.
9. The heat treatment system (1000) according to any of items 1-8, wherein the tray holder (1300) is transported linearly along a vertical direction.
10. The heat treatment system (1000) according to any one of items 3-9, further comprising
   a dividing piece (1600) arranged between the first heat treatment chamber (1100) and the second heat treatment chamber (1200) having a closed position and an opened position, wherein
   when being in the opened position, the dividing piece (1600) allows the tray holder (1300) to be transported reciprocally between the first position (1301) and the second position (1302) through the first opening (1110) and the second opening (1210), and
   when being in the closed position, the dividing piece (1600) closes the first opening (1110).
11. The heat treatment system (1000) according to item 10, wherein
   the dividing piece (1600) is configured to be stored behind the heat treatment system (1000) when being in the opened position.
12. The heat treatment system (1000) according to item 10 or 11, wherein
   the dividing piece (1600) configured to be stored in a rolled shape.
13. The heat treatment system (1000) according to any one of items 1-12, wherein
   the elevation apparatus (1400) comprises
   a movable mount (1431) detachably connectable to the tray holder (1300), and
   a tackle means (1430) adapted to lift and lower the movable mount (1431).
14. The heat treatment system (1000) according to any one of items 1-12, wherein
   the elevation apparatus (1400) comprises a rack and pinion adapted to lift and lower the tray holder (1300).
15. The heat treatment system (1000) according to any one of items 1-12, wherein
   the elevation apparatus (1400) comprises a hydraulic plunger (1421) arranged at the rack system (1500) and adapted to lift and lower the tray holder (1300).

## Claims

1. A monitoring apparatus (450) being adapted to be mounted to a heat treatment chamber, the monitoring apparatus (450) comprising
- a monitoring apparatus cover (452);
- at least one visual sensor (260) accommodated within the monitoring apparatus cover (452) to observe the inside of the heat treatment chamber; and
- a processing unit for monitoring or analyzing the heating process observed by the at least one visual sensor (260);
wherein an inside surface (482) of the monitoring apparatus cover (452) next to the at least one visual sensor (260) is darkened or has a dark or black color.

2. The monitoring apparatus (450) of claim 1, wherein the inside surface (482) is darkened by coating the inside with a dark colored or black cover such as a dark colored or a black paint coating, and/or the inside surface (482) is covered by a dark colored or black plastic film or a dark colored or black resin.

3. The monitoring apparatus (450) of claim 1 or 2, wherein the inside surface (482) is a roughened inside surface coated by a dark colored or black paint coating.

4. The monitoring apparatus (450) of any one of the preceding claims, wherein the monitoring apparatus cover (452) is fixed to an outside window (456) of the heat treatment chamber, and wherein a blind (468) is mounted between the outside window (456) and an inside window (462) of the heat treatment chamber, to reduce reflections towards the inside of the monitoring apparatus cover (452).

5. The monitoring apparatus (450) of claim 4, wherein the monitoring apparatus cover (452) is attached outside of an outside window (456) of a triple glass window (458) comprising the outside window (456), a middle window (460), and the inside window (462), and wherein the blind (468) is mounted between the middle window (460) and the outside window (456) and/or the middle window (460) and the inside window (462).

6. The monitoring apparatus (450) of claim 4 or 5, wherein the blind (468) has a darkened inside surface (484) to reduce internal reflections.

7. The monitoring apparatus (450) of any one of the preceding claims, wherein the at least one visual sensor (260) comprises a camera or an array of photodiodes.

8. The monitoring apparatus (450) of any one of the preceding claims, wherein the at least one visual sensor (260) has an optical sensitivity in the visible light spectrum and/or in the infrared light spectrum.

9. The monitoring apparatus (450) of any one of the preceding claims, wherein visual sensors (260) are mounted in a tilted manner to a visual sensor holder (470) inside the monitoring apparatus cover (452), to enable an observation of trays in the heat treatment chamber being loaded with food to be heated.

10. The monitoring apparatus (450) of claim 9, wherein the mounting angle of the visual sensors (260) downwards with regard to a horizontal direction is in a range of 10° to 45°, or 15° to 30°, or 20° to 25°.

11. The monitoring apparatus (450) of any one of the preceding claims, wherein next to the at least one visual sensor (260), a separate housing (480) may be provided within the monitoring apparatus cover (452), to accommodate the processing unit for monitoring or analyzing the heating process.

12. The monitoring apparatus (450) of any one of the preceding claims, wherein a fan (472) is provided to ventilate the interior of the monitoring apparatus cover (452).

13. The monitoring apparatus (450) of any one of the preceding claims, wherein two fans (472) are mounted at opposite sides of the monitoring apparatus cover (452) to be operated to both guide filtered air inside the monitoring apparatus cover (452) to generate an enhanced pressure inside the monitoring apparatus cover (452).

14. The monitoring apparatus (450) of any one of the preceding claims, wherein the monitoring apparatus cover (452) is fixed to a door mount (454) of a door of the heat treatment chamber, wherein the door mount (454) is adapted to replace an original door mount of a heat treatment device door.

15. A heat treatment monitoring system comprising
- a heat treatment machine comprising a heat treatment chamber, the heat treatment chamber; and
- a monitoring apparatus (450) as claimed by any one of the preceding claims.
